(19) Europäisches Patentamt / European Patent Office / Office européen des brevets

(11) **EP 3 239 251 B1**

(12) **EUROPÄISCHE PATENTSCHRIFT**

(45) Veröffentlichungstag und Bekanntmachung des Hinweises auf die Patenterteilung:
**23.01.2019 Patentblatt 2019/04**

(51) Int Cl.:
***C09D 7/00*** *(2018.01)*

(21) Anmeldenummer: **16167819.8**

(22) Anmeldetag: **29.04.2016**

(54) **KIT-OF-PARTS-ABTÖNSYSTEM, VERWENDUNG DIESES ABTÖNSYSTEMS FÜR DIE HERSTELLUNG ABGETÖNTER ANSTRICH- UND PUTZSYSTEME, ABGETÖNTES ANSTRICH- UND PUTZSYSTEM, ANSTRICHE UND PUTZE ERHÄLTLICH AUS DIESEM ANSTRICH- BZW. PUTZSYSTEM, ABTÖNVORRICHTUNG UND EIN VERFAHREN ZUM ABTÖNEN EINER FARBTONZUSAMMENSETZUNG**

KIT OF PARTS TINTING SYSTEM, USE OF THIS TINTING SYSTEM FOR THE PRODUCTION OF TINTED COATING AND PLASTER SYSTEMS, TINTED COAT AND PLASTER SYSTEM, COATS AND PLASTERS OBTAINED USING THIS COATING OR PLASTER SYSTEM, TINTING DEVICE AND A METHOD FOR TINTING A HUE COMPOSITION

KIT DE PIECES DE SYSTEME A TEINTER, UTILISATION DUDIT SYSTEME A TEINTER POUR LA PRODUCTION D'UN SYSTEME DE CREPI ET OU DE PEINTURE, SYSTEME DE CREPI ET DE PEINTURE NUANCE, CREPI ET PEINTURE OBTENUS A PARTIR DUDIT {J}SYSTEME DE CREPI, DISPOSITIF DE SYSTEME A TEINTER ET PROCEDE DE SYSTEME A TEINTER D'UNE COMPOSITION DE NUANCE DE COULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.11.2017 Patentblatt 2017/44**

(73) Patentinhaber: **DAW SE**
**64372 Ober-Ramstadt (DE)**

(72) Erfinder:
 • **Lohmann, Alfred**
  **64372 Ober-Ramstadt (DE)**
 • **Ptatschek, Volker**
  **63773 Goldbach (DE)**
 • **Weber, Enno**
  **64372 Ober-Ramstadt (DE)**

(74) Vertreter: **Metten, Karl-Heinz**
**Boehmert & Boehmert**
**Anwaltspartnerschaft mbB**
**Pettenkoferstrasse 22**
**80336 München (DE)**

(56) Entgegenhaltungen:
**WO-A1-00/60015      WO-A1-2013/037928**
**WO-A2-2010/030971      WO-A2-2011/056564**

• **JIE QIN ET AL: "The Optical Properties of Black Coatings and Their Estimated Cooling Effect and Cooling Energy Savings Potential", JOURNAL OF POWER AND ENERGY ENGINEERING, Bd. 02, Nr. 04, 31. März 2014 (2014-03-31), Seiten 68-75, XP55286187, ISSN: 2327-588X, DOI: 10.4236/jpee.2014.24011**

**Beschreibung**

Die vorliegende Erfindung betrifft ein Kit-of-parts-Abtönsystem für die Farbeinstellung von Anstrich- und Putzsystemen, die Verwendung dieses Abtönsystems für die Herstellung abgetönter Anstrich- und Putzsysteme, eine Abtönvorrichtung für die Herstellung einer definierten Anzahl von Farbtönen dieses Anstrich- bzw. Putzsystems und ein Verfahren zum Abtönen einer Farbtonzusammensetzung.

Anstrichfarben mit voreingestelltem Farbton werden einerseits werkseitig hergestellt und in gebrauchsfertiger Form angeboten, können aber auch am Anwendungsort, dem sogenannten "Point of Use", wie auch am Verkaufsort, dem sogenannten "Point of Sale", durch den Einsatz geeigneter Abtönvorrichtungen erhalten werden. Letztere Variante ist üblicherweise in Baumärkten anzutreffen. Insbesondere bei größeren Projekten werden geeignete Abtönvorrichtungen auch direkt am Anwendungsort eingesetzt, um ausgehend von einer Basisfarbe die benötigten Wand- bzw. Fassadenfarben zu erhalten.

In der DE 10 2009 023 606 A1 wird ein Farbmischsystem vorgeschlagen, das eine einfache und kostengünstige Endherstellung von qualitativ hochwertigen, gebrauchsfertigen Anstrichfarben in einer großen Anzahl von exakt nachstellbaren Farbtönen mit hoher Qualität durch den Anwender unmittelbar am Anwendungsort ("Point Of Use") ermöglichen und zudem für die Verwendung im "Do-It-Yourself"-Bereich geeignet sein soll. Dies wird angeblich durch Zurverfügungstellung eines Farbmittelsatzes enthaltend eine Basisfarbe, eine Farbtonkomponente und eine Aufhellkomponente, die sowohl der Basisfarbe wie auch der Farbtonkomponente zugemischt werden kann, erreicht, wobei die abtönenden, die Deckfähigkeit und/oder die Grundhelligkeit einstellenden Inhaltsstoffe weniger als 40 Volumenprozent der Basisfarbe, mehr als 5 und weniger als 75 Volumenprozent jeder Farbtonkomponente und mehr als 50 Volumenprozent jeder Aufhellkomponente zu umfassen haben.

Der Fokus bei dunklen Fassadenfarben liegt zurzeit auf dem Einsatz von NIR-Pigmenten (NIR: Near Infrared), um zu optimierten TSR-Anstrichsystemen (TSR: Total Solar Reflection) zu gelangen. Dunkle Fassadenfarben führen bei Sonneneinstrahlung in der Regel zu einer signifikanten Erhöhung der Temperatur der Beschichtungsoberfläche. Dies führt nicht selten zu Rissen im Putz, insbesondere wenn dieser Putz Bestandteil eines Wärmedämmverbundsystems ist. Durch den Einbau von NIR-Pigmenten in dunkelfarbige Anstrichsysteme kann der Temperaturanstieg an der Oberfläche einer Außenfassade bei Sonneneinstrahlung merklich verringert werden. Sonnenlicht, das als Strahlung bis zur Erdoberfläche gelangt, lässt sich im Wesentlichen in drei Teilbereiche aufteilen: ca. 3% der auf der Oberfläche ankommenden Energie decken den UV-Spektralbereich (295-400 nm) ab, nahezu 39% den visuellen Bereich (400-700 nm) und etwa 58 % den NIR-Bereich (700-2500 nm). Der MIR- und FIR-Bereich oberhalb 2500 nm tragen nur geringe Anteile am Sonnenlicht bei.

Die WO 2011/056564 A2 offenbart Infrarot reflektierende Beschichtungszusammensetzungen und gehärtete Beschichtungen, die auf einem Substrat abgeschieden sind, sowie Mehrkomponenten-Verbundbeschichtungssysteme. Die Beschichtungszusammensetzungen umfassen ein infrarottransparentes Pigment und ein infrarotreflektierendes Pigment.

Der wissenschaftliche Artikel Jie Qin et al., "The Optical Properties of Black Coatings and Their Estimated Cooling Effect and Cooling Energy Savings Potential", Journal of Power and Energy Engeneering, 2014, 2, 68-75 betrifft eine systematische Untersuchung von schwarzen Beschichtungsfarbstoffen bezüglich ihrer Oberflächentemperaturen.

Die WO 2010/030971 A2 offenbart ein Verfahren zur Herstellung einer dunkelfarbigen Beschichtung, umfassend die folgenden Schritte: (1) Aufbringen einer NIR-opaken Beschichtungsschicht A' erhalten aus einer wassergetragenen pigmentierten Beschichtungszusammensetzung A auf ein Substrat, (2) Aufbringen einer Beschichtungsschicht B' erhalten aus einer wasserbasierenden pigmentierten Beschichtungszusammensetzung B auf das mit der Beschichtungsschicht A' versehene Substrat, (3) Trocknung des in Schritt 2 erhaltene beschichtete Substrats in einem Trocknungsschritt, (4) Auftragen einer Klarlackschicht und (5) simultanes Aushärten der Schichten, wobei beide Beschichtungszusammensetzungen A und B wässriges Mikrogel und Schichtsilicat umfassen.

In der WO 2013/037928 A1 wird ein Beschichtungsmaterial vorgeschlagen, das unter Sonneneinstrahlung eine verringerte Aufwärmung zeigen soll, ohne gleichzeitig Einbußen bei der Farbtiefe und den Farbeigenschaften in Kauf nehmen zu müssen. Dies würde mit einer Beschichtung gelingen, die ein polymeres Bindemittel, mindestens ein organisches Pigment und/oder mindestens ein anorganisches Pigment, mindestens einen Farbstoff mit einer Transmission von mindestens 75% im Bereich von 700 bis 2500 nm sowie gegebenenfalls ein Effektpigment umfasst, wobei die Beschichtung eine Gesamtsolarreflexion (TSR) zeigt von (i) $\geq$ 40%, wenn 60 < L* < 100 oder (ii) $\geq$ 30%, wenn 30 < L* < 60 oder (iii) $\geq$ 20%, wenn 0 < L* < 30, wobei L* die Helligkeit darstellt und wobei der TSR-Wert nach der Norm ASTM E 903-96 mit direkt normaler solarspektraler Bestrahlung gemäß ASTM G159-98 und der Helligkeitswert L* unter einem Betrachtungswinkel von 25° zu bestimmen sind.

In der DE 11 2011 100 613 T5 wird ein sehr spezielles Schwarzpigment mit verbesserter solarer Reflexion vorgeschlagen, das auf der Anwesenheit einer effektiven Menge an Phosphat in Form einer festen Lösung mit der Formel $(Cr_xFe_yMe_z)_2O_n$ mit $x + y + z = 1$ basiert.

Eine effektive TSR-Beschichtung erhält man gemäß der JP 2008/194563 A durch Verwendung von Pigmentkompositen mit einer durchschnittlichen Größe nicht oberhalb von 200 nm aus Wolframoxid, Titannitrid, Titanoxynitrid und einem geeigneten Bindemittel.

Mit den aus dem Stand der Technik bekannten Abtönsystemen lassen sich insbesondere dunkle Farben noch stets nicht zufriedenstellend in reproduzierbarer Weise einstellen. Dies hat sich vor allem auch bei der Farbeinstellung dunkler Fassadenfarben als Nachteil erwiesen.

Der vorliegenden Erfindung lag die Aufgabe zugrunde, ein Abtönsystem zur Verfügung zu stellen, dass nicht mehr mit den Nachteilen des Stands der Technik behaftet ist und das insbesondere die zuverlässige und reproduzierbare, gleichwohl kostengünstige Herstellung einer Vielzahl an abgetönten Anstrichsystemen auch am Anwendungsort oder am Point of Sale gestattet.

Die Aufgabe wird durch ein Kit-of-parts-Abtönsystem gemäß dem Anspruch 1 gelöst. Demgemäß wurde ein Kit-of-parts-Abtönsystem für die Farbeinstellung von Anstrich- und Putzsystemen gefunden, umfassend a) mindestens eine Abtönbasiszusammensetzung (auch Abtönbase genannt), enthaltend mindestens ein NIR-reflektierendes Schwarzpigment und/oder mindestens ein NIR-transparentes Schwarzpigment oder eine NIR-reflektierende und/oder NIR-transparente schwarze Pigmentmischung, und eine Basiszusammensetzung, enthaltend mindestens ein Bindemittel und b) mindestens eine Farbtonzusammensetzung enthaltend mindestens ein buntes und/oder unbuntes Pigment, mindestens ein zweites Additivund mindestens ein zweites Lösemittel.

Das erfindungsgemäße Abtönsystem zeichnet sich in einer bevorzugten Ausführungsform dadurch aus, dass es mit nur einer einzigen Abtönbasiszusammensetzung (Abtönbase) auskommt. Ausgehend von dieser Abtönbasiszusammensetzung können durch Abtönen mit der mindestens einen Farbtonzusammensetzung, insbesondere der Vielzahl an Farbtonzusammensetzungen des erfindungsgemäßen Abtönsystems Anstrich- und Putzsysteme mit unterschiedlichen Farbeinstellungen gezielt eingestellt und auf reproduzierbare Weise erhalten werden.

In einer Ausführungsform enthält die Basiszusammensetzung ein erstes Lösungsmittel und/oder ein erstes Additiv. Auch ist es bevorzugt, wenn das Kit-of-parts-Abtönsystem mindestens zwei Farbtonzusammensetzungen, besonders bevorzug mindestens 14 Farbtonzusammensetzungen, umfasst.

In einer weiteren Ausführungsform wurde ein Kit-of-parts-Abtönsystem für die Farbeinstellung von Anstrich- und Putzsystemen gefunden, umfassend a) mindestens eine, insbesondere genau eine, Abtönbasiszusammensetzung (auch Abtönbase genannt), bestehend aus mindestens einem NIR-reflektierendes Schwarzpigment und/oder mindestens ein NIR-transparentes Schwarzpigment oder eine NIR-reflektierende und/oder NIR-transparente schwarze Pigmentmischung, und eine Basiszusammensetzung, bestehend aus mindestens einem Bindemittel. Auch kann es vorgesehen sein, dass die mindestens eine Farbtonzusammensetzung aus mindestens einem bunten und/oder unbunten Pigment, mindestens einem zweites Additiv und mindestens einem zweiten Lösemittel besteht.

In einer weiteren Ausführungsform ist das zweite Additiv ein Netz- und Dispergiermittel.

In einer weiteren Ausführungsform umfasst das Kit-of-parts-Abtönsystem für die Farbeinstellung von Anstrich- und Putzsystemen, a) genau eine Abtönbasiszusammensetzung (auch Abtönbase genannt).

Geeignete NIR-reflektierende Schwarzpigmente sowie NIR-transparente Schwarzpigmente sind dem Fachmann bekannt.

Als besonders bevorzugte NIR-reflektierende Schwarzpigmente solche der C.I.-Pigmentklassen P.Br. 29 und P.G. 17 genannt. Exemplarisch seien als geeignete Vertreter der C.I.-Pigmentklasse P.Br. 29 die Produkte Heucodur IR Black 869 ($(Fe,Cr)O_3$), 910, 940 ($Fe(Fe,Cr)_2O_4$) und945 der Heubach GmbH, die Produkte Black 411A und Black 10P950 der Firma Shepherd, die Produkte AL-41247 und AL-42247 der AL-FARBEN S.A. und das Produkt Sicopal Schwarz L 0095 der BASF SE genannt.

Ebenfalls geeignet sind Xfast® Schwarz 0095 und Luconyl® NG Schwarz 0095 der BASF SE. Ferner seien exemplarisch als geeignete Vertreter der C.I.-Pigmentklasse P.G. 17 die Produkte AL-81191 und AL-82191 der AL-FARBEN S.A., die Produkte 24-775 PK, 24-10204 PK, 24-10430, 24-10466 der Ferro Corporation und das Produkt Black 10C909A der Firma Shepherd genannt.

Ebenfalls gut geeignet als NIR-reflektierende Schwarzpigmente sind solche der C.I.-Pigmentklasse P.Bk. 33, beispielsweise das Produkt Bayferrox 303T, und solche der C.I.-Pigmentklasse P.Bk. 30, beispielsweise die Produkte Heucodur IR Black 950 der Heubach GmbH und Black 376A der Fa. Sheperd.

Besonders geeignete NIR-reflektierende Schwarzpigmente gehen demgemäß in einer Ausführungsvariante zurück auf bzw. umfassen Eisen/Manganoxidpigmente, Chrom/Eisen/ Nickeloxidpigmente sowie insbesondere Chrom/Eisenoxidpigmente.

Bei Eisen/Manganoxidpigmenten handelt es sich im Allgemeinen um Mischoxide aus Manganoxid und Eisenoxid. Chrom/Eisen/Nickeloxidpigmente liegen vorzugsweise in der Spinellstruktur vor und können über die Summenformel $(Ni,Fe)(Cr,Fe)_2O_4$ verfügen. Sie können erhalten werden durch Calcinierung von Chrom(II)oxid, Eisen(II)oxid und Eisen(III)oxid. Gegebenenfalls können auch noch CuO, MnO und/oder $Mn_2O_3$ als Modifiziermittel hinzugegeben werden. Chrom/Eisenoxidpigmente basieren im Allgemeinen auf Mischungen aus Eisenoxiden und Chromoxiden, insbesondere Cr(III)-Oxiden und können u.a. durch die Formeln $(Fe,Cr)_2O_3$ und $(Fe,Cr)O_3$ wiedergegeben werden.

Unter den NIR-transparenten Schwarzpigmenten wird besonders bevorzugt zurückgegriffen auf solche der Pigmentklassen C.I. Pigment Schwarz 31 (P.Bk. 31) und/oder C.I. Pigment Schwarz 32 (P.Bk. 32), wobei die Pigmentklasse der Perylene, z.B. C.I. Pigment Black 32 besonders bevorzugt ist. Exemplarisch seien die Produkte Paliogen Black L0086 und Paliogen Black L0084 der BASF SE genannt.

Geeignet als NIR-reflektierende oder NIR-transparente Systeme sind auch schwarze Pigmentmischungen. Als schwarze Pigmentmischungen kommen Mischungen enthaltend mehrere NIR-reflektierende Schwarzpigmente oder Mischungen enthaltend mehrere NIR-transparente Schwarzpigmente sowie Mischungen enthaltend mindestens ein NIR-reflektierendes Schwarzpigment und mindestens ein NIR-transparentes Schwarzpigment in Betracht. Des Weiteren fallen unter schwarze Pigmentmischungen im Sinne der vorliegenden Erfindung auch Mischungen aus Pigmenten, die in ihrer Abmischung einen schwarzen Farbton liefern und über NIR-reflektierende oder NIR-transparente Eigenschaften verfügen. Dies kann beispielsweise durch Anwesenheit mindestens eines NIR-reflektierenden und mindestens eines, insbesondere von mindestens zwei nicht NIR-reflektierenden Pigmenten in der genannten Mischung und/oder durch Anwesenheit mindestens eines NIR - transparenten und mindestens eines, insbesondere von mindestens zwei nicht NIR-transparenten Pigmenten in der genannten Mischung bewerkstelligt werden. Bevorzugt sind mindestens zwei, insbesondere sämtliche Pigmente in der genannten Mischung NIRreflektierend und/oder NIR-transparent. Solche geeignete, eine schwarze Farbe liefernde Pigmentmischungen können z.B. enthalten i) Pigmente der Pigmentklassen P.R. 254 (rot), P.G.7 (grün) und P.R. 101 (weiteres Buntpigment Eisenoxidrot) oder Pigmente der Pigmentklassen P.Y. 74 (gelb), P.B. 15:1 (blau) und P.V 23 (weiteres Violettpigment) oder iii) Pigmente der Pigmentklassen P.V. 23 (violett), P.G. 7 (grün) und P.R. 254 (weiteres Rotpigment) oder iv) P.V. 23 (violett), P.Y. 74 (gelb) und P.B. 15:1 (weiteres Blaupigment).

Exemplarisch sei ferner als schwarze, NIR-reflektierende Pigmentmischung, die in ihrer Abmischung aus mehreren Pigmenten, die einen schwarzen Farbton liefern, verwiesen auf eine Mischung enthaltend mindestens ein Phthalocyanin-Blaupigment B als ein erstes Pigment und ein Phthalocyanin-grün-Pigment G als ein zweites Pigment, und weiter umfassend mindestens ein anderes Buntpigment Pi, wobei vorzugsweise in Bezug auf die Mengen M an Gewichtsanteilen gilt: 1,5 < M (G) / M (B) < 4,0, 2 < M (B) < 20, 17 < M (G) < 40 und 45 < M (Pi) < 63. Hierbei kann in einer bevorzugten Ausgestaltung das Phthalocyanin-Blaupigment ausgewählt sein aus der Gruppe bestehend aus C.I. Pigment Blue 15:3, Pigment Blue 15:1, Pigment Blue 15:2, Pigment Blue 15:4, Pigment Blue 15:6 und deren beliebigen Mischungen und/oder das Phthalocyanin-Grünpigment ausgewählt sein aus der Gruppe bestehend aus C.I. Pigment Green 7, C.I. Pigment Green 36 und deren beliebigen Mischungen. Vorteilhafter Weise wird bei dieser Ausführungsform das mindestens eine andere Buntpigment Pi ausgewählt aus der Gruppe bestehend aus anorganischem Gelbpigment, insbesondere Eisenoxidgelb, Zinksulfidgelb, Bismut-Vanadiumgelb, Vanadium-Zinngelb und/oder Vanadium-Zirkoniumgelb, einem Diketopyrrolopyrrol-Pigment, einem Naphthol-Pigment und deren beliebigen Mischungen.

Hierbei sind Abtönbasiszusammensetzungen mit solchen NIR-reflektierenden Schwarzpigmenten bzw. NIR-reflektierenden schwarzen Pigmentmischungen sowie solchen NIR-transparenten Schwarzpigmenten und/oder NIR-transparenten schwarzen Pigmentmischungen bevorzugt, die eine Beschichtung aus dieser Abtönbasiszusammensetzung mit einem h-Wert im Bereich von 0 bis 360 und einem c-Wert kleiner 5 liefern, jeweils ermittelt nach DIN EN ISO 11664-4:2012-06.

Besonders gute Ergebnisse hinsichtlich hoher TSR-Werte lassen sich dadurch erzielen, dass die Abtönbasiszusammensetzung ausschließlich NIR-reflektierende Schwarzpigmente und/oder NIR-transparente Schwarzpigmente, bevorzugt ausschließlich NIR-reflektierende Schwarzpigmente und NIR-transparente Schwarzpigmente, enthält. Ferner bevorzugt sind Abtönbasiszusammensetzungen, die ausschließlich Pigmente enthält, die eine NIR-reflektierende schwarze Pigmentmischung liefern, oder die ausschließlich Pigmente enthält, die eine NIR-transparente schwarze Pigmentmischung liefern.

Die totale solare Reflektion (TSR) kann anhand der Norm ASTM G173-03 ermittelt werden. Der TSR-Wert lässt sich z. B. mit einem UV-VIS-NIR Spektrophotometer vom Typ Cary 5000 (Firma Agilent Technologies) mit Ulbricht-Kugel (150 mm Integrationskugel) für Messungen mit diffuser Reflexion bestimmen. Die Beschichtungsmasse ist für diese Messung gleichmäßig aufzutragen, beispielsweise mit einem Spaltrakel mit einer Spalthöhe von 400 $\mu$m auf einer Leneta-Prüfkarte Typ 2 DX. Anschließend wird die Beschichtung getrocknet.

Die Reflektionswerte der erhaltenen Beschichtung können dann mit dem UV-VIS-NIR Spektralphotometer in einem Wellenlängenbereich von 280 nm bis 2500 nm bestimmt werden. Die Messung erfolgt dabei vorzugsweise ausschließlich über dem mit der Beschichtungsmasse beschichteten Bereich der Prüfkarte.

Für die Berechnung der TSR-Werte kann als Berechnungsgrundlage das Referenzspektrum der Globalstrahlung der Sonne nach ASTM G 173-0 3 (2008) herangezogen werden (Hemispherical Spectral Solar Irradiance; Air Mass 1,5). Das Verhältnis Rs der reflektierten Solarstrahlung zur globalen Solarstrahlung ist gegeben durch folgende Gleichung:

$$Rs = \int_{280\ nm}^{2500\ nm} \frac{R_\lambda \times E_\lambda\, d\lambda}{E_\lambda\, d\lambda}$$

Hierin bedeuten:

$R_\lambda$    Reflektionswert der Probe bei gegebener Wellenlänge

$E_\lambda$    Solarstrahlung bei einer gegebenen Wellenlänge $\lambda$ in $W \times m^{-2} \times nm^{-1}$

$d_\lambda$    für die Berechnung maßgebliches Wellenlängenintervall.

Der TSR-Wert in Prozent ist dabei nach der folgenden Gleichung zu berechnen:

$$TSR\ (\%) = Rs * 100\ \%$$

Der TSR-Wert gibt folglich denjenigen prozentualen Anteil der eingestrahlten Sonnenenergie an, der von einer Beschichtung reflektiert wird. Je höher der TSR-Wert ist, desto mehr Sonnenenergie wird reflektiert und desto weniger erwärmt sich eine Beschichtung.

In einer bevorzugten Ausgestaltung des erfindungsgemäßen Abtönsystems wird auf eine solche Abtönbasiszusammensetzung, wenn als Anstrichmasse vorliegend, zurückgegriffen, deren Beschichtung, erhalten mit einem Rakel mit einer Spalthöhe von 400 μm auf einer weißen Substratoberfläche, insbesondere dem weißen Teil der Leneta-Prüfkarte vom Typ 2DX, oder auf eine solche Abtönbasiszusammensetzung, wenn als Putzmasse vorliegend, zurückgegriffen, deren Beschichtung, erhalten durch Abziehen der Putzmasse auf einer festen, ebenen weißen Substratoberfläche, insbesondere dem weißen Teil der Leneta-Prüfkarte vom Typ 2DX, über einen TSR-Wert größer oder gleich 10 %, vorzugsweise größer oder gleich 15 % und besonders bevorzugt größer oder gleich 20 % und insbesondere größer oder gleich 25 % verfügt, wobei TSR (%) = Rs x 100 % ist und Rs anhand der nachfolgenden Gleichung ermittelt wird:

$$Rs = \int_{280\,nm}^{2500\,nm} \frac{R_\lambda \times E_\lambda\,d\lambda}{E_\lambda\,d\lambda}$$

mit

$R_\lambda$    Reflektionswert der Probe bei gegebener Wellenlänge

$E_\lambda$    Solarstrahlung bei einer gegebenen Wellenlänge $\lambda$ in $W \times m^{-2} \times nm^{-1}$

$d_\lambda$    für die Berechnung maßgebliches Wellenlängenintervall,

wobei als Berechnungsgrundlage das Referenzspektrum der Globalstrahlung der Sonne nach ASTM G 173-03 (2008) (Hemispherical Spectral Solar Irradiance mit Air Mass 1,5) heranzuziehen ist. Indem man die Abtönbasiszusammensetzungen der vorliegenden Erfindung, wenn als solche in Form von Anstrichsystemen oder Putzsystemen vorliegend, auf die vorangehend geschilderte Weise auf ihren TSR-Wert untersucht, kann festgestellt werden, ob Schwarzpigmente oder schwarze Pigmentmischungen als NIR-reflektierende Schwarzpigmente, als NIR-transparente Schwarzpigment bzw. als NIR-reflektierende und /oder NIR-transparente schwarze Pigmentmischungen im Sinne der Erfindung besonders geeignet sind.

In der Abtönbasiszusammensetzung liegen das mindestens eine NIR-reflektierende und/oder das mindestens eine NIR-transparente Pigment in einer zweckmäßigen Ausgestaltung in einer Menge im Bereich von 0,1 bis 8,0 Gewichtsprozent, bevorzugt im Bereich von 0,5 bis 7,0 Gewichtsprozent und besonders bevorzugt im Bereich von 1,0 bis 6,0 Gewichtsprozent, jeweils bezogen auf das Gesamtgewicht der Abtönbasiszusammensetzung, vor.

Besonders vorteilhafte Eigenschaften lassen sich auch mit solchen erfindungsgemäßen Abtönsystemen erzielen, bei denen eine Abtönbasiszusammensetzung zum Einsatz kommt, die, wenn also solche als Beschichtung aufgetragen, einen Hellbezugswert gemäß DIN 5033-1:2009-05 im Bereich von 3,8 bis 10, bevorzugt im Bereich von 3,8 bis 8 und besonders bevorzugt im Bereich von 3,8 bis 6 aufweist. Dies gelingt insbesondere mit den vorliegend als bevorzugt herausgestellten NIR-reflektierenden Schwarzpigmenten, NIR-transparenten Schwarzpigmenten und den NIR-reflektierenden oder NIR-transparenten schwarzen Pigmentmischungen.

Ganz besonders bevorzugt sind solche erfindungsgemäßen Abtönsysteme, bei denen eine Abtönbasiszusammensetzung, enthaltend mindestens ein NIR-reflektierendes Schwarzpigment und/oder mindestens ein NIR-transparentes Schwarzpigment oder eine NIR-reflektierende und/oder NIR-transparente schwarze Pigmentmischung, zum Einsatz kommt, die, wenn also solche als Beschichtung aufgetragen, einen Hellbezugswert gemäß DIN 5033-1:2009-05 im Bereich von 3,8 bis 10, bevorzugt im Bereich von 3,8 bis 8 und besonders bevorzugt im Bereich von 3,8 bis 6 aufweist und die, wenn als solche als Beschichtung aufgetragen, einen h-Wert im Bereich von 0 bis 360 und einen c-Wert kleiner 5, ermittelt nach DIN EN ISO 11664-4:2012-06, aufweist.

In einer zweckmäßigen Ausgestaltung ist es auch möglich, dass die Abtönbasiszusammensetzungen neben den genannten NIR-reflektierenden Schwarzpigmenten und/oder NIR-transparenten Schwarzpigmenten bunte oder unbunte organische oder anorganische Pigmente enthalten können.

Bunte und/oder unbunte organische und/oder anorganische Pigmente werden regelmäßig auch für die Farbtonzusammensetzungen des erfindungsgemäßen Abtönsystems eingesetzt.

Als geeignete Buntpigmente kommen anorganische und organische Buntpigmente in Betracht. Unter den organischen Buntpigmenten besonders bevorzugt sind C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C. I. Pigment Green 36, C.I. Pigment Orange 36, C.I. Pigment Orange 43, C.I. Pigment Red 122, C.I. Pigment Red 168, C.I. Pigment Red 179, C.I. Pigment Red 254, C.I. Pigment Red 255, C.I. Pigment Red 264, C.I. Pigment Red 282, C.I. Pigment Violett 19, C.I. Pigment Violett 23, Pigment Yellow 74, Pigment Yellow 97, C.I. Pigment Yellow 110, C.I. Pigment Yellow 138, C.I. Pigment Yellow 139 und/oder C.I. Pigment Yellow 154.

Unter den anorganischen Buntpigmenten besonders bevorzugt sind C.I. Pigment Blue 28, z.B. Heucodur IR Blue 550 und/oder Sicopalblau L6210, C.I. Pigment Blue 29, z.B. ULT-RAMARINE BLUE - DS54, C.I. Pigment Blue 36, z.B. Heucodur IR Blue 5-100, 4G , C.I. Pigment Bk. 12, z.B. Yellow 20P296, C.I. Pigment Br. 24, z.B. 23-10408 PK, Sicotan Gelb L 1912, C.I. Pigment Br. 25, C.I. Pigment Br. 33, z. B. Brown 10P857, Shepherd Brown 157, Shepherd Brown 12, 10363 Dark Brown (Ferro), C.I Pigment Br. 35, C.I. Pigment Br. 7, C.I. Pigment Br. 29, C.I. Pigment Green 17, z.B. Colortherm Green GN M, C.I. Pigment Green 26, z.B. AL-11151, AL-12151, Green 30C678, Green 410, 21-4700 PK, C.I. Pigment Green 50, z.B. Heucodur IR Green 5G; AL-11068, C.I. Pigment Orange 82, z.B. Sicopal Orange L2430, C.I. Pigment Red 101, z.B. Bayferrox 130 M, C.I. Pigment Violett 14, z.B. Violett 92, C.I. Pigment Violett 15, C.I. Pigment Violett 48, z.B. AL-71036, C.I. Pigment Yellow 119, z.B. AL-41153, C.I. Pigment Yellow 163, z.B. AL-41264, C.I. Pigment Yellow 164, z.B. 26-10550 PK, Brown 10C873, C.I. Pigment Yellow 184, z.B. DCC Yellow 2 GTA, C.I. Pigment Yellow 216, z.B. Orange 10C341, C.I. Pigment Yellow 227, z.B. Yellow 10C151, C.I. Pigment Yellow 42, z.B. Bayferrox 3920, C.I. Pigment Yellow 53, z.B. Yellow 10C112, AL-51001, AL-51114.

Geeignete anorganische und organische Pigmente können hierbei z.B. ausgewählt werden aus der Gruppe bestehend aus Monoazopigmenten, insbesondere C.I. Pigment Braun 25, C.I. Pigment Orange 5, 13, 38, 64 oder 67, C.I. Pigment Rot 1, 2, 3, 4, 5, 8, 9, 12, 17, 22, 23, 31, 48: 1, 48: 2, 48: 3, 48: 4, 49, 49: 1, 51: 1, 52: 1, 52: 2, 53, 53: 1, 53: 3, 57: 1, 58: 2, 58: 4, 63, 112, 146, 148, 170, 175, 184, 185, 187, 191: 1, 208, 210, 245, 247 und/oder 251, C.I. Pigment Gelb 1, 3, 62, 65, 73, 120, 151, 154, 168, 181, 183 und/oder 191 und/oder C.I. Pigment Violett 32, Diazopigmenten, insbesondere C.I. Pigment Orange 16, 34, 44 und/oder 72 und/oder C.I. Pigment Gelb 12, 13, 14, 16, 17, 81, 83, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71, 73 und/oder 81 und/oder C.I. Pigment Rot 270 und/oder 272, Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange, und/oder C.I. Pigment Rot 194, Perylenpigmenten, insbesondere C.I. Pigment Rot 123, 149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Orange 67 und/oder C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27, und Buntpigmenten, insbesondere Chromoxid, Chromoxidhydratgrün, Chromgrün (zum Beispiel C.I. Pigment Grün 48), Ultramariengrün, Kobaltblau (zum Beispiel C.I. Pigment 72), Manganblau, Ultramarinviolett, Kobaltviolett, Manganviolett, Cersulfid (zum Beispiel C.I. Pigment Rot 265 und/oder C.I. Pigment Orange 75), Ultramarinrot, Eisenoxidbraun (zum Beispiel C.I. Pigment Braun 6 und/oder 7), Mischbraun, Spinell- und Korundphasen (zum Beispiel C.I. Pigment Braun 31, 34, 37, 39 und/oder 40), Chromtitangelb (zum Beispiel C.I. Pigment Gelb 162, 163, 164), Praseodymgelb (zum Beispiel C.I. Pigment Gelb 159), Vanadiumgelb (zum Beispiel C.I. Pigment Gelb 158 und/oder 160), Nickeltitanat (zum Beispiel C.I. Pigment Gelb 157, 161 und /oder 189), Spinellphasen (zum Beispiel C.I. Pigment Gelb 119).

Darüber hinaus ist es insbesondere auch unter ökonomischen Gesichtspunkten besonders vorteilhaft, dass die Farbtonzusammensetzung, insbesondere sämtliche Farbtonzusammensetzungen des erfindungsgemäßen Abtönsystems kein NIR-reflektierendes Schwarzpigment, insbesondere kein NIR-reflektierendes Pigment, und/oder kein NIR-transparentes Schwarzpigment, insbesondere kein NIR-transparentes Pigment, und besonders bevorzugt kein NIR-reflektierendes Pigment und kein NIR-transparentes Pigment aufweist.

Die mindestens eine Farbtonzusammensetzung, vorzugsweise die mindestens zwei Farbtonzusammensetzungen und besonders bevorzugt die mindestens 14 Farbtonzusammensetzungen bzw. vorzugsweise sämtliche Farbtonzusammensetzungen des erfindungsgemäßen Abtönsystems liegen in einer besonders zweckmäßigen Ausgestaltung in Form einer Paste, auch Abtön- und/oder Aufhellpaste genannt, vor. Bei den Farbtonzusammensetzungen kann es sich sowohl um sogenannte Pigmentpräparationen wie auch um sogenannte Volltonfarben handeln. Hierbei zeichnen sich Pigmentpräparationen regelmäßig dadurch aus, dass sie, anders als Volltonfarben, nicht für die Aufbringung als Anstrichfarbe geeignet sind. Pigmentreparationen liegen regelmäßig in Pastenform vor.

Die Abtönbasiszusammensetzung kann je nach Anwendung des mit dem erfindungsgemä-ßen Abtönsystem angestrebten Anstrich- und Putzsystems variiert werden. Beispielsweise kann die Abtönbasiszusammensetzung von einer Basiszusammensetzung Gebrauch machen, die eine wässrige Lasur, einen Wasserlack, eine lösemittelhaltige Lasur, einen Lösemittellack, eine Anstrichfarbe, insbesondere Dispersionsfarbe wie Dispersionsaußenfarbe, eine Silikatfarbe, eine Silikonharzfarbe, eine Dispersionssilikatfarbe, eine Sol-Silikat-Farbe, eine Nano-Hybridfarbe, insbesondere auf Basis einer wässrigen Organosilikat-Hybrid-Dispersion, beispielsweise eine Farbe auf Basis der NQG-Technologie(NQG = Nano-Quarz-Gitter), eine Bodenbeschichtung, einen Putz, insbesondere einen Silikonharzputz, einen Sol-Silikat-Putz, einen Organosilikat-Hybriddispersionsputz, beispielsweise auf Basis der NQG-Technologie, einen Kunstharzputz oder einen Silikatputz, darstellt oder liefert. Demgemäß kann die Basiszusammensetzung auch eine Grundrezeptur für eine wässrige Lasur, einen Wasserlack, eine lösemittelhaltige Lasur, einen Lösemittellack, eine Anstrichfarbe, insbesondere eine Dispersionsfarbe und besonders bevorzugt eine Dispersionsaußenfarbe, eine Silikatfarbe, eine Silikonharzfarbe, eine Dispersionssilikatfarbe, eine Sol-Silikat-Farbe, eine Nano-Hybridfarbe, insbesondere auf Basis einer wässrigen Organosilikat-Hybrid-Dispersion, beispielsweise eine Farbe auf Basis der NQG-Technologie(NQG = Nano-Quarz-Gitter), eine Bodenbeschichtung, einen Putz, insbesondere einen Silikonharzputz, einen Sol-Silikat-Putz, einen Organosilikat-Hybriddispersionsputz, beispielsweise auf Basis der NQG-Technologie, einen Kunstharzputz oder einen Silikatputz, sein, aus der diese durch Einfärbung gewonnen werden. Besonders bevorzugt werden die erfindungsgemäßen Abtönsysteme eingesetzt, um abgetönte Außenfarben und abgetönte Fassadenputze, insbesondere Außenputze, zu erhalten. Die wässrige Organosilikat-Hybrid-Dispersion von geeigneten Nano-Hybridfarben sowie die Organosilikat-Hybriddispersionsputze basieren insbesondere auf Siliziumdioxid und einem hiermit chemisch verknüpften oder vernetzten organischen Polymer, insbesondere einem Copolymer enthaltend Acrylsäure- und Methacrylsäureester. Mit den genannten Hybridbindemitteln können Dispersionen mit einer sehr homogenen Verteilung auf Nanoebene gewährleistet werden. Ein solches geeignetes Hybridbindemittel stellt das Produkt Mowilith Nano® 9420 der Firma Celanese Emulsions GmbH, Frankfurt a.M., dar. Selbstverständlich können für die genannten Farben und Putze auch beliebige Mischungen an Bindemittelsystemen eingesetzt werden, wie sie für die vorangehend genannten Farben oder Putze jeweils zum Einsatz kommen.

Dem Fachmann sind die jeweils erforderlichen Basiszusammensetzungen bzw. Grundrezepturen geläufig. Auch ist dem Fachmann bekannt, ob als erstes Lösemittel für die Abtönbasiszusammensetzung Wasser oder ein organisches Lösemittel einzusetzen ist. Beispielsweise wird bei lösemittelhaltigen Lacken in der Regel kein Wasser verwendet. Die Abtönbasiszusammensetzungen lassen sich z.B. durch inniges Vermengen der Basiszusammensetzung mit mindestens einem NIR-reflektierenden Schwarzpigment oder mit einer NIR-reflektierenden schwarzen Pigmentmischung und/oder mit mindestens einem NIR-transparenten Schwarzpigment oder mit einer NIR-transparenten schwarzen Pigmentmischung erhalten.

Das Bindemittel der Abtönbasiszusammensetzung des erfindungsgemäßen Abtönsystems umfasst zum Beispiel ein organisches Bindemittel in Form einer wässrigen Dispersion auf Basis von Polymeren enthaltend Acrylate, Vinylacetat und/oder Styrol, insbesondere auf Basis von Reinacrylaten, oder ein anorganisches Bindemittel auf Basis von Wasserglas und/oder Kieselsol, oder ein Hybridbindemittel, insbesondere gemäß der NQG-Technologie. Das Bindemittel der Abtönbasiszusammensetzung kann auch auf einem Acrylharz, Acrylsiliconharz, Siliconharz, Urethanharz, ungesättigtem Polyesterharz oder Alkydharz basieren.

Des Weiteren kann vorgesehen sein, dass das mindestens eine erste Additiv der Abtönbasiszusammensetzung und/oder das mindestens eine zweite Additiv der Farbtonzusammensetzung ausgewählt ist aus der Gruppe bestehend aus Verdickern, Entschäumern, FlammSchutzmitteln, Filmkonservierungsmitteln, Hydrophobierungsmitteln, Mattierungsmitteln, UV-Absorbern, Radikalfängern, Netz- und Dispergiermitteln und beliebigen Mischungen dieser Verbindungen. Verdicker und/oder Entschäumer sind als Additive bevorzugt.

In einer zweckmäßigen Ausgestaltung des erfindungsgemäßen Abtönsystems können die Abtönbasiszusammensetzung und/oder die Farbtonzusammensetzung über mindestens einen Füllstoff verfügen.

Geeignete Basiszusammensetzungen für Putzsysteme in Form von Silikatputzen umfassen mindestens eine organische Bindemitteldispersion, beispielsweise auf Acrylat- oder Styrolacrylatbasis, Füllstoffe und/oder Körnung, Wasserglas, übliche Additive und Wasser. Als geeignete übliche Additive seien Verdicker, Entschäumer, Topfkonservierer, Filmkonservierer, Netzmittel, Dispergiermittel, pH-Mittel, Hydrophobiermittel und deren beliebige Mischungen genannt. Eine exemplarische Basiszusammensetzung für Putzsysteme in Form von Silikatputzen umfasst 4 bis 5 Gew.-% einer Bindemitteldispersion auf Acrylat- oder Styrolacrylatbasis, 68 bis 75 Gew.-% an Füllstoffen und/oder Körnung, 0 bis 4 Gew.-% Flammschutzmittel, z.B. Aluminiumhydroxid, 0 bis 0,2 Gew.-% Filmhilfsbindemittel, insbesondere in Form aliphatischer Lösemittel, 0 bis 0,12 Gew.-% Topfkonservierung, 0 bis 0,15 Gew.-% Filmkonservierungsmittel, 0 bis 0,15 Gew.-% Dispergiermittel, 0 bis 0,1 Gew.-% Entschäumer, 0,1 bis 0,7 Gew.-% Cellulose-Verdicker, insbesondere Methylzellulose, 0 bis 0,1 Gew.-% Verdicker, der nicht ein Cellulose-Verdicker ist, 0 bis 0,5 Gew.-% Hydrophobierungsmittel, insbesondere in Form einer Silikonverbindung, 0 bis 0,7 Gew.-% Fasern, insbesondere Cellulosefasern, 0,5 bis 2,0 Gew.-% Wasserglas, insbesondere Kaliumwasserglas, und, vorzugsweise bis 12 Gew.-%, Wasser sowie gegebenenfalls Glykolether. Die Einzelmengen der die Basiszusammensetzung bildenden Komponenten addieren sich stets zu 100 Gew.-% und beziehen sich jeweils auf den reinen Stoff.

Geeignete Basiszusammensetzungen für Putzsysteme in Form von Silikonputzen umfassen mindestens eine organische Bindemitteldispersion, beispielsweise auf Acrylat- oder Styrolacrylatbasis, Füllstoffe und/oder Körnung, übliche Additive und Wasser sowie gegebenenfalls Wasserglas. Als geeignete übliche Additive seien Verdicker, Entschäumer, Topfkonservierer, Filmkonservierer, Netzmittel, Dispergiermittel, pH-Mittel, Hydrophobiermittel und deren beliebige Mischungen genannt. Eine exemplarische Basiszusammensetzung für Putzsysteme in Form von Silikonputzen umfasst 5 bis 6 Gew.-% einer Bindemitteldispersion auf Acrylat- oder Styrolacrylatbasis, 56 bis 65 Gew.-% Füllstoffe und/oder Körnung, 8 bis 10 Gew.-% Flammschutzmittel, insbesondere Aluminiumhydroxid, 0 bis 0,2 Gew.-% Filmhilfsbindemittel, insbesondere in Form aliphatischer Lösemittel, 0 bis 0,5 Gew.-% Glykolether, 0 bis 0,12 Gew.-% Topfkonservierungsmittel, 0,1 bis 0,4 Gew.-% Filmkonservierungsmittel, 0 bis 0,1 Gew.-% Dispergiermittel, 0 bis 0,1 Gew.-% Entschäumer, 0,1 bis 0,7 Gew.-% Cellulose-Verdicker, insbesondere Methylzellulose, 1,0 bis 3,0 Gew.-% Hydrophobierungsmittel, insbesondere in Form einer Silikonverbindung, 0 bis 0,7 Gew.-% Fasern, insbesondere Cellulosefasern und, insbesondere 10 bis 15 Gew.-%, Wasser sowie gegebenenfalls Wasserglas, insbesondere Kaliumwasserglas. Die Einzelmengen der die Basiszusammensetzung bildenden Komponenten addieren sich stets zu 100 Gew.-% und beziehen sich jeweils auf den reinen Stoff.

Geeignete Basiszusammensetzungen für Putzsysteme in Form von Kunstharz-Putzen umfassen mindestens eine organische Bindemitteldispersion, beispielsweise auf Acrylat- oder Styrolacrylatbasis, Füllstoffe und/oder Körnung, übliche Additive und Wasser sowie gegebenenfalls Wasserglas. Als geeignete übliche Additive seien Verdicker, Entschäumer, Topfkonvervierer, Filmkonservierer, Netzmittel, Dispergiermittel, pH-Mittel, Hydrophobiermittel und deren beliebige Mischungen genannt. Eine exemplarische Basiszusammensetzung für Putzsysteme in Form von in Form Kunstharz-Putzen umfasst 5 bis 6 Gew.-% einer Bindemitteldispersion auf Acrylat- oder Styrolacrylatbasis, 56 bis 65 Gew.-% Füllstoffe und/oder Körnung, 8 bis 10 Gew.-% Flammschutzmittel, insbesondere Aluminiumhydroxid, 0 bis 0,2 Gew.-% Filmhilfsbindemittel, insbesondere aliphatischer Lösemittel, 0 bis 0,12 Gew.-% Topfkonservierungsmittel, 0,1 bis 0,4 Gew.-% Filmkonservierungsmittel, 0 bis 0,1 Gew.-% Dispergiermittel, 0 bis 0,1 Gew.-% Entschäumer, 0,1 bis 0,7 Gew.-% Cellulose-Verdicker, insbesondere Methylzellulose, 0 bis 0,5 Gew.-% Hydrophobierungsmittel, insbesondere in Form einer Silikonverbindung, 0 bis 0,7 Gew.-% Cellulosefasern und, insbesondere 10 bis 15 Gew.-%, Wasser sowie gegebenenfalls Wasserglas, insbesondere Kaliumwasserglas. Die Einzelmengen der die Basiszusammensetzung bildenden Komponenten addieren sich stets zu 100 Gew.-% .-% und beziehen sich jeweils auf den reinen Stoff.

Geeignete Basiszusammensetzungen für Anstrichsysteme in Form von Dispersionsaußenfarben umfassen mindestens eine organische Bindemitteldispersion, beispielsweise auf Acrylat- oder Styrolacrylatbasis, Füllstoff, insbesondere calcitische und/oder silikatische Füllstoffe, übliche Additive und Wasser. Als geeignete übliche Additive seien Verdicker, Entschäumer, Toptkonservierer, Filmkonservierer, Netzmittel, Dispergiermittel, pH-Mittel, Hydrophobiermittel und deren beliebige Mischungen genannt. Eine exemplarische Basiszusammensetzung für Anstrichsysteme in Form von Dispersionsaußenfarben umfasst 10 bis 50 Gew.-%, bevorzugt 15 bis 40 Gew.-% und besonders bevorzugt 15 bis 30 Gew.-%, einer Bindemitteldispersion auf Acrylat- oder Styrolacrylatbasis, 35 bis 60 Gew.-%, bevorzugt 45 bis 55 Gew.-%, Füllstoffe, insbesondere calcitische Füllstoffe, silikatische Füllstoffe oder deren beliebige Mischungen, maximal 5 Gew.-%, vorzugsweise maximal 3 Gew.-%, an üblichen Additiven und Wasser. Die Einzelmengen der die Basiszusammensetzung bildenden Komponenten addieren sich stets zu 100 Gew.-% und beziehen sich jeweils auf den reinen Stoff.

Geeignete Basiszusammensetzungen für Anstrichsysteme in Form von, insbesondere transparenten, wässrigen Lasuren umfassen mindestens eine organische Bindemitteldispersion, beispielsweise auf Acrylat- oder Reinacrylatbasis, Verdicker, Entschäumer und Lösungsmittel sowie gegebenenfalls übliche Additive. Als geeignete übliche Additive seien Netzmittel, Mattierungsmittel, Filmhilfsbindemittel, UV-Stabilisatoren und deren beliebige Mischungen genannt. Eine exemplarische Basiszusammensetzung für Anstrichsysteme in Form von, insbesondere transparenten, wässrigen Lasuren umfasst 40 bis 80 Gew.-%, vorzugsweise 25 bis 40 Gew.-% und besonders bevorzugt 29 bis 35 Gew.-%, an einer, insbesondere 40 bis 55-prozentigen, Bindemitteldispersion, beispielsweise auf Acrylat- oder Reinacrylatbasis, 0,01 bis 2,0 Gew.-% Verdicker, 0,01 bis 1,0 Gew.-% Entschäumer und Wasser als Lösungsmittel sowie gegebenenfalls 0,1 bis 1,0 Gew.-% Netzmittel, 0,0 bis 5,0 Gew.-% Mattierungsmittel, 0,0 bis 5,0 Gew.-%

Filmhilfsbindemittel und 0,0 bis 6,0 Gew.-% UV-Stabilisator, wobei der Anteil an Additiven vorzugsweise insgesamt 5 Gew.-% nicht übersteigen sollte. Die Einzelmengen der die Basiszusammensetzung bildenden Komponenten addieren sich stets zu 100 Gew.-%.

Geeignete Basiszusammensetzungen für Anstrichsysteme in Form einer wässrigen Lackbasis umfassen mindestens eine Acrylatharz und Wasser sowie übliche Additive. Als geeignete übliche Additive seien Biozide, Ammoniak, Mattierungsmittel, Entschäumer, Verdicker, Dispergiermittel und deren beliebige Mischungen genannt. Eine exemplarische Basiszusammensetzung für Anstrichsysteme in Form einer wässrigen Lackbasis umfasst 0 bis 1,0, insbesondere 0 bis 0,1 Gew.-% Biozide, 1 bis 5, insbesondere 1 bis 1,8 Gew.-%, 2-(2-Butoxyethoxy)ethanol, 0 bis 1, insbesondere 0 bis 0,18 Gew.-%, 2-Amino-2-methylpropanol, 0 bis 1, insbesondere 0 bis 0,045 Gew.-%, Ammoniak, 0 bis 8, insbesondere 0 bis 2,5 Gew.-%, Mattierungsmittel, 0 bis 10, insbesondere 0 bis 6,53 Gew.-% , Polypropylenglykol, 0 bis 0,5, insbesondere 0 bis 0,12 Gew.-%, Natriumbenzoat (Flash-Rost), 0 bis 1, insbesondere 0 bis 0,2 Gew.-% Gewichtsprozent Entschäumer, vorzugsweise in Form von Mineralöl, 0 bis 5, insbesondere 0 bis 0,5 Gew.-%, 2,2,4-Trimethyl-1,3-Pentanediol Diisobbutyrate, sowie, vorzugsweise 40 bis 70, und besonders bevorzugt 40 bis 65 Gew.-%, Wasser, 0 bis 3, insbesondere 0 bis 0,6 Gew.-%, Verdicker, vorzugsweise Hase-Verdicker, 0 bis 3, insbesondere 0 bis 0,32 Gew.-%, Dispergiermittel, 0 bis 3, insbesondere 0 bis 0,18 Gew.-%, Entschäumer, insbesondere in Form eines Silikon-Entschäumers, 10 bis 40, insbesondere 10 bis 25 Gew.-%, Acrylatharz, und 0 bis 3, insbesondere 0 bis 0,75 Gew.-%, Paraffinwachs. Die Einzelmengen der die Basiszusammensetzung bildenden Komponenten addieren sich stets zu 100 Gew.-% und beziehen sich jeweils auf den reinen Stoff.

Geeignete Basiszusammensetzungen für Anstrichsysteme in Form einer lösungsmittelhaltigen Lackbasis für seidenglänzende und glänzende bzw. glänzend transparente Lacksysteme umfassen mindestens ein Bindemittel auf Alkydharz-Basis, insbesondere auf Basis eines Langöl-Alkydharzes, mindestens ein Netzmittel, mindestens einen Primärtrockner, mindestens einen Sekundärtrockner, mindestens ein Hautverhütungsmittel und mindestens ein organisches Lösungsmittel, vorzugsweise umfassend, insbesondere entaromatisierte, Kohlenwasserstoffe. Eine exemplarische Basiszusammensetzung für Anstrichsysteme in Form einer lösungsmittelhaltigen Lackbasis für seidenglänzende und glänzende bzw. glänzend transparente Lacksysteme umfasst 55 bis 70 Gew.-% Alkydharz-Bindemittel, insbesondere auf Basis eines Langöl-Alkydharzes, 0,1 bis 1 Gew.-% Netzmittel, 0 bis 8 Gew.-% Mattierungsmittel, insbesondere umfassend einen Füllstoff, 0 bis 1 Gew.-% Verlaufs- bzw. Kratzschutzmittel, 0,05 bis 0,2 Gew.-% Primärtrockner, 0,2 bis 1,5 Gew.-% Sekundärtrockner, 0,2 bis 1,5 Gew.-% Hautverhütungsmittel und 30 bis 40 Gew.-% entaromatisierte Kohlenwasserstoffe, wobei im Bindemittel auch 5 bis 20 Gew.-% thixotropes Alkydharz enthalten sein können. Die Einzelmengen der die Basiszusammensetzung bildenden Komponenten addieren sich stets zu 100 Gew.-% und beziehen sich jeweils auf den reinen Stoff. Geeignete Basiszusammensetzungen für Anstrichsysteme in Form einer lösungsmittelhaltigen, insbesondere transparenten, Lasur umfassen mindestens ein Bindemittel auf Alkydharz-Basis, insbesondere auf Basis eines Langöl-Alkydharzes, mindestens ein Netzmittel, mindestens einen Primärtrockner, mindestens einen Sekundärtrockner, mindestens ein Hautverhütungsmittel und mindestens ein organisches Lösungsmittel, umfassend, insbesondere entaromatisierte, Kohlenwasserstoffe. Eine exemplarische Basiszusammensetzung für Anstrichsysteme in Form einer lösungsmittelhaltigen, insbesondere transparenten, Lasur umfasst 40 bis 60 Gew.-% Bindemittel, insbesondere auf Basis eines Langöl-Alkydharzes, 0 bis 0,5 Gew.-% Verdicker, 0,1 bis 1 Gew.-% Netzmittel, 0 bis 5 Gew.-% Mattierungsmittel, insbesondere umfassend mindestens einen Füllstoff, 0 bis 1 Gew.-% Verlaufs- bzw. Kratzschutzmittel, 0,05 bis 0,2 Gew.-% Primärtrockner, 0,2 bis 1,5 Gew.-% Sekundärtrockner, 0,2 bis 1,5 Gew.-% Hautverhütungsmittel, 40 bis 50 Gew.-% Lösungsmittel, insbesondere in Form von entaromatisierten Kohlenwasserstoffen, wobei im Bindemittel auch 5 bis 20 Gew.-% thixotropes Alkydharz enthalten sein können. Die Einzelmengen der die Basiszusammensetzung bildenden Komponenten addieren sich stets zu 100 Gew.-% und beziehen sich jeweils auf den reinen Stoff.

Mit den erfindungsgemäßen Abtönsystemen lassen sich vielfältige abgetönte Anstrich- und Putzsysteme durch Vermischen der Abtönbasiszusammensetzung a) mit einer Farbtonzusammensetzung b) erhalten. Solche abgetönten Anstrichsysteme umfassen zum Beispiel als Anstrichfarben wässrigen Lasuren, Wasserlacke, lösemittelhaltige Lasuren, Lösemittellacke, Dispersionsfarben, insbesondere Dispersionsaußenfarben, Silikatfarben, Silikonharzfarben, Dispersionssilikatfarben, Sol-Silikat-Farben, Nano-Hybridfarben, insbesondere auf Basis einer wässrigen Organosilikat-Hybrid-Dispersion, beispielsweise eine Farbe auf Basis der NQG-Technologie(NQG = Nano-Quarz-Gitter), und Bodenbeschichtungen und als Putzsysteme Putze, insbesondere Silikonharzputze, Silikatputze, Sol-Silikat-Putze, Organosilikat-Hybriddispersionsputze, beispielsweise auf Basis der NQG-Technologie, und Kunstharzputze. Es hat sich überraschend gezeigt, dass die erfindungsgemäßen Anstrich- und Putzsysteme sich besonders gut für die Anbringung von Anstrichen und Putzen auf gedämmten Untergründen, beispielsweise WDVS-Untergründe eignen. So lassen sich mit dem erfindungsgemäßen Abtönsystem ohne weiteres dunkel abgetönte Anstrichfarben und Putze erhalten, die auch bei intensiver Sonneneinstrahlung nicht zu einer ausgeprägten Erwärmung neigen und die insbesondere auch bei intensiver Sonnenstrahlung keine für das WDVS-System kritischen Temperaturen erreichen, beispielsweise im Bereich von etwa 75 bis 80 °C.

Alternativ können Anstriche und Putze mit durch das erfindungsgemäße Kit-of-parts-Abtönsystem erhaltenen Anstrich- bzw. Putzsystemen auch auf Oberflächen von Substraten angebracht werden, die ausgewählt sind aus der Gruppe bestehend aus Holzsubstraten, Metallsubstraten, Putzen, insbesondere Wärmedämmputzen, Leichtputzen, Ultraleichtputzen oder mineralisch oder organisch gebundenen Strukturputzen, Naturstein, Beton, insbesondere Porenbeton oder Leichtbeton, Ziegeln, Backstein und beliebigen Mischungen. Dabei können Substratoberflächen auch Bestandteil einer Vorhangfassadenbekleidung, insbesondere einer hinterlüfteten Vorhangfassadenbekleidung, sein.

Geeignet sind solche Anstriche und Putze, die einen Hellbezugswert gemäß DIN 5033-1:2009-05 im Bereich von 3,8 bis 40, vorzugsweise im Bereich 3,8 bis 30 und besonders bevorzugt im Bereich von 3,8 bis 25, aufweisen.

Es hat sich darüber hinaus überraschend gezeigt, dass sich mit dem erfindungsgemäßen Abtönsystem insbesondere auch dunkle Anstriche und Putze erhalten lassen, die sich durch sehr hohe TSR-Werte auszeichnen, insbesondere bei gleichzeitig niedrigen Hellbezugswerten. Demgemäß sind Anstriche und Putze zugänglich, wobei dieser Anstrich, wenn mit einem Rakel mit einer Spalthöhe von 400 $\mu$m auf einer weißen Substratoberfläche, insbesondere dem weißen Teil der Leneta-Prüfkarte vom Typ 2DX, erhalten, oder wobei dieser Putz, erhalten durch Abziehen der Putzmasse, beispielsweise mit einer Kelle, auf einer festen, ebenen weißen Substratoberfläche, insbesondere dem weißen Teil der Leneta-Prüfkarte vom Typ 2DX, über einen TSR-Wert größer oder gleich 25 %, vorzugsweise größer oder gleich 30 % und besonders bevorzugt größer oder gleich 35 % und insbesondere größer oder gleich 40 % verfügen, wobei TSR (%) = Rs x 100 % ist und Rs anhand der Gleichung ermittelt wird:

$$ Rs = \int_{280\,nm}^{2500\,nm} \frac{R_\lambda \times E_\lambda\, d\lambda}{E_\lambda\, d\lambda} $$

mit

$R_\lambda$    Reflektionswert der Probe bei gegebener Wellenlänge

$E_\lambda$    Solarstrahlung bei einer gegebenen Wellenlänge $\lambda$ in W x m$^{-2}$ x nm$^{-1}$

$d_\lambda$    für die Berechnung maßgebliches Wellenlängenintervall,

wobei als Berechnungsgrundlage das Referenzspektrum der Globalstrahlung der Sonne nach ASTM G 173-03 (2008) (Hemispherical Spectral Solar Irradiance mit Air Mass 1,5) heranzuziehen ist. Insbesondere sind mit dem erfindungsgemäßen Abtönsystem auch solche Anstriche und Putze zugänglich, die sowohl über einen Hellbezugswert gemäß DIN 5033-1:2009-05 im Bereich von 3,8 bis 40, vorzugsweise im Bereich 3,8 bis 30 und besonders bevorzugt im Bereich von 3,8 bis 25, verfügen als auch einen TSR-Wert größer 25 %, vorzugsweise größer 30 % und besonders bevorzugt größer 35 %, jeweils ermittelt, wie vorangehend beschrieben, aufweisen.

Die der Erfindung zu Grunde liegende Aufgabe wird des Weiteren gelöst durch eine Abtönvorrichtung für die Herstellung einer definierten Anzahl von Farbtönen eines Anstrich- und Putzsystems, insbesondere eines erfindungsgemäßen Anstrich- und Putzsystems, umfassend ein erfindungsgemäßes Abtönsystem, eine Aufnahme- und Dosiereinrichtung für die mindestens eine Abtönbasiszusammensetzung, enthaltend diese mindestens eine Abtönbasiszusammensetzung, und mindestens eine Aufnahme- und Dosiereinrichtung für die mindestens eine Farbtonzusammensetzung, vorzugsweise die mindestens zwei Farbtonzusammensetzungen und besonders bevorzugt die mindestens 14 Farbtonzusammensetzungen, enthaltend diese Farbtonzusammensetzung, oder insbesondere eine Vielzahl an Aufnahme- und Dosiereinrichtungen für die Vielzahl an Farbtonzusammensetzungen, jeweils enthaltend eine Farbtonzusammensetzung aus der Vielzahl an Farbtonzusammensetzungen, und eine Mischvorrichtung, eingerichtet und ausgelegt, um die Abtönbasiszusammensetzung mit einer Farbtonzusammensetzung zu vermengen.

Außerdem wird die der Erfindung zu Grunde liegende Aufgabe gelöst durch ein Verfahren zum Abtönen einer Farbtonzusammensetzung, umfassend die Schritte

a) Zurverfügungstellung einer Abtönbasiszusammensetzung gemäß dem erfindungsgemäßen Abtönsystem,

b) Zurverfügungstellung von mindestens einer Farbtonzusammensetzung, vorzugsweise von mindestens zwei Farbtonzusammensetzungen und besonders bevorzugt von mindestens 14 Farbtonzusammensetzungen, gemäß dem erfindungsgemäßen Abtönsystem und

c) Vermischen der Abtönbasiszusammensetzung gemäß a) und einer Farbtonzusammensetzung gemäß b) unter Erhalt eines abgetönten Anstrich- oder Putzsystems, insbesondere des erfindungsgemäßen Anstrich- oder Putzsystems.

Schließlich betrifft die vorliegende Erfindung die Verwendung einer Zusammensetzung, enthaltend mindestens ein NIR-reflektierendes Schwarzpigment und/oder mindestens ein NIR-transparentes Schwarzpigment oder eine NIR-reflektierende und /oder NIR-transparente schwarze Pigmentmischung wie vorangehend beschrie-

ben und eine Basiszusammensetzung, enthaltend mindestens ein Bindemittel sowie mindestens ein erstes Lösemittel und mindestens ein erstes Additiv als, insbesondere einzige, Abtönbasiszusammensetzung (auch Abtönbase genannt) in einem Kit-of-parts-Abtönsystem für die Farbeinstellung von Anstrich- und Putzsystemen. Hierbei ist eine solche Verwendung vorgesehen, bei der das Kit-of-parts-Abtönsystem ferner umfasst mindestens eine Farbtonzusammensetzung, vorzugsweise mindestens zwei Farbtonzusammensetzungen, besonders bevorzug mindestens 14 Farbtonzusammensetzungen, enthaltend mindestens ein buntes und/oder unbuntes Pigment, mindestens ein zweites Additiv, insbesondere Netz- und Dispergiermittel, und mindestens ein zweites Lösemittel wie vorangehend beschrieben.

Mit der vorliegenden Erfindung wurde überraschend ein Abtönsystem gefunden, mit dem sich Anstrich- und Putzsysteme auf einfache und zuverlässige Weise erhalten lassen, die Beschichtungen mit ausgeprägter solarer Reflexion liefern. Hierbei ist von Vorteil, dass das erfindungsgemäße Abtönsystem auf herkömmlichen Abtönmaschinen eingesetzt werden kann. Als besonders positiv hat sich zudem erwiesen, dass mit dem erfindungsgemäßen Abtönsystem keine zusätzlichen NIR-reflektierenden oder -transparenten Pigmente am Anwendungsort mit den Farbtonzusammensetzungen zur Verfügung gestellt werden müssen. Diese Pigmente liegen bereits in der Abtönbasiszusammensetzung vor.

Die vorliegende Erfindung basiert folglich auf der überraschenden Erkenntnis, die Abtönbasiszusammensetzung bzw. Abtönbase mit mindestens einem NIR-reflektierenden Pigment und/oder mindestens einem NIR-transparenten Schwarzpigment auszustatten. Bei Abtönzusammensetzungen nach dem Stand der Technik werden regelmäßig titandioxidhaltige, d.h. weiße, oder transparente Abtönzusammensetzungen eingesetzt. Die Abtönbasiszusammensetzung im Sinne der Erfindung kann auf jeder herkömmlichen Abtönmaschine als Basismaterial eingesetzt werden. Der gewünschte Farbton für ein Anstrich- oder Putzsystem kann sodann durch Abmischen mit Standardpigmenten, d.h. ohne auf in der Regel kostenintensive NIR-reflektierende oder NIR-transparente Pigmente zurückgreifen zu müssen, erhalten werden. Die so erhaltenen Anstrich- und Putzsysteme zeichnen sich auch dadurch aus, dass mit ihnen Beschichtungen mit sehr hohen TSR-Werten zugänglich sind. Hierdurch kann die Aufheizung von zum Beispiel Außenfassaden merklich verringert werden.

Mit der vorliegenden Erfindung kommt somit erstmalig eine NIR-pigmentierte Abtönbase bzw. Abtönbasiszusammensetzung für die Herstellung TSR-optimierter Beschichtungssysteme auf herkömmlichen Abtönmaschinen zum Einsatz. Demgemäß erlaubt das erfindungsgemäße Abtönsystem die Herstellung NIR-pigmentierter Anstrich- und Putzsysteme am Anwendungsort (Point of Use) wie auch am Point of Sale.

Ein weiterer Vorteil des erfindungsgemäßen Abtönsystems ist auch darin zu sehen, dass abgetönte Farben wie auch abgetönte Putze, die mit NIR-reflektierenden und/oder NIR-transparenten Schwarzpigmenten oder mit entsprechenden NIR-reflektierenden und/oder NIR-transparenten schwarzen Pigmentmischungen ausgestattet sind, auch in kleinsten Mengen, z.B. in 0,5 1 Farbgebinden oder 25 kg Putzgebinden, in wirtschaftlicher Weise zur Verfügung gestellt und mit unterschiedlichen Farbzusammensetzungen des erfindungsgemäßen Abtönsystems vermischt und insbesondere aufgehellt werden können.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Kit-of-parts-Abtönsystem für die Farbeinstellung von Anstrich- und/oder Putzsystemen, umfassend

   a) mindestens eine Abtönbasiszusammensetzung, enthaltend mindestens ein NIR-reflektierendes Schwarzpigment und/oder mindestens ein NIR-transparentes Schwarzpigment oder eine NIR-reflektierende und /oder NIR-transparente schwarze Pigmentmischung, und eine Basiszusammensetzung, enthaltend mindestens ein Bindemittel sowie
   b) mindestens eine Farbtonzusammensetzung, enthaltend mindestens ein buntes und/oder unbuntes Pigment, mindestens ein zweites Additiv und mindestens ein zweites Lösemittel.

2. Abtönsystem nach Anspruch 1, **dadurch gekennzeichnet, dass** eine Beschichtung aus der Abtönbasiszusammensetzung, enthaltend mindestens ein NIR-reflektierendes Schwarzpigment und/oder mindestens ein NIR-transparentes Schwarzpigment oder eine NIR-reflektierende und/oder NIR-transparente schwarze Pigmentmischung, einen h-Wert im Bereich von 0 bis 360 und einen c-Wert kleiner 5, ermittelt nach EN ISO 11664-4:2012-06, aufweist.

3. Abtönsystem nach Anspruch 1 oder 2, **dadurch gekennzeichnet, dass** die Abtönbasiszusammensetzung ausschließlich NIR-reflektierende Schwarzpigmente und/oder NIR-transparente Schwarzpigmente enthält oder dass die Abtönbasiszusammensetzung ausschließlich Pigmente enthält, die eine NIR-reflektierende schwarze Pigmentmischung liefern, und/oder dass die Abtönbasiszusammensetzung ausschließlich Pigmente enthält, die eine NIR-transparente schwarze Pigmentmischung liefern.

4. Abtönsystem nach einem oder mehreren der vorangehenden Ansprüche, **dadurch gekennzeichnet,**

**dass**

dieses mindestens zwei Farbtonzusammensetzungen, bevorzugt mindestens 14 Farbtonzusammensetzungen, umfasst.

5. Abtönsystem nach einem oder mehreren der vorangehenden Ansprüche, **dadurch gekennzeichnet, dass**

die mindestens eine Farbtonzusammensetzung, vorzugsweise die mindestens zwei Farbtonzusammensetzungen und besonders bevorzugt die mindestens 14 Farbtonzusammensetzungen, kein NIR-reflektierendes Schwarzpigment, insbesondere kein NIR-reflektierendes Pigment, und/oder kein NIR-transparentes Schwarzpigment, insbesondere kein NIR-transparentes Pigment, aufweist.

6. Abtönsystem nach einem oder mehreren der vorangehenden Ansprüche, **dadurch gekennzeichnet, dass**

die Farbtonzusammensetzung eine Abtön- und/oder Aufhellpaste darstellt oder umfasst.

7. Abtönsystem nach einem oder mehreren der vorangehenden Ansprüche, **dadurch gekennzeichnet, dass**

das mindestens eine NIR-reflektierende Schwarzpigment und/oder das mindestens eine NIR-transparente Schwarzpigment in der Abtönbasiszusammensetzung in einer Menge im Bereich von 0,1 bis 8,0 Gewichtsprozent, bevorzugt im Bereich von 0,5 bis 7,0 Gewichtsprozent und besonders bevorzugt im Bereich von 1,0 bis 6,0 Gewichtsprozent, jeweils bezogen auf das Gesamtgewicht der Abtönbasiszusammensetzung, vorliegt.

8. Abtönsystem nach einem oder mehreren der vorangehenden Ansprüche, **dadurch gekennzeichnet, dass**

die Basiszusammensetzung eine wässrige Lasur, einen Wasserlack, eine lösemittelhaltige Lasur, einen Lösemittellack, eine Anstrichfarbe, insbesondere eine Dispersionsfarbe, besonders bevorzugt eine Dispersionsaußenfarbe, eine Dispersionssilikatfarbe, eine Silikatfarbe, eine Silikonharzfarbe, eine Sol-Silikat-Farbe und/oder Nano-Hybridfarben, insbesondere auf Basis einer wässrigen Organosilikat-Hybrid-Dispersion, eine Bodenbeschichtung, einen Putz, insbesondere einen Silikonharzputz, einen Sol-Silikat-Putz, einen Organosilikat-Hybriddispersionsputz, einen Kunstharzputz und/oder einen Silikatputz, darstellt oder die Grundrezeptur hierfür ist.

9. Abtönsystem nach einem oder mehreren der vorangehenden Ansprüche, **dadurch gekennzeichnet, dass**

das mindestens eine NIR-reflektierende Schwarzpigment ausgewählt ist aus der Gruppe bestehend aus NIR-reflektierenden Schwarzpigmenten der C.I.-Pigmentklasse P.Br. 29, NIR-reflektierenden Schwarzpigmenten der C.I.-Pigmentklasse P.G. 17, NIR-reflektierenden Schwarzpigmenten der C.I.-Pigmentklasse P.Bk. 33 und NIR-reflektierenden Schwarzpigmenten der C.I.-Pigmentklasse P.Bk. 30 und/oder dass das mindestens eine NIR-transparente Schwarzpigment ausgewählt ist aus der Gruppe bestehend aus NIR-transparenten Schwarzpigmenten der C.I.-Pigmentklasse Pigment Schwarz 31 (P.Bk. 31) und NIR-transparenten Schwarzpigmenten der C.I.-Pigmentklasse Pigment Schwarz 32 (P.Bk. 32).

10. Abtönsystem nach einem oder mehreren der vorangehenden Ansprüche, **dadurch gekennzeichnet, dass**

die Basiszusammensetzung mindestens ein erstes Lösemittel und/oder mindestens ein erstes Additiv enthält.

11. Abtönsystem nach einem oder mehreren der vorangehenden Ansprüche, **dadurch gekennzeichnet, dass**

das Bindemittel der Abtönbasiszusammensetzung ein organische Bindemittel in Form einer wässrigen Dispersion auf Basis von Polymeren enthaltend Acrylate, Vinylacetat und/oder Styrol, insbesondere auf Basis von Reinacrylaten, oder ein anorganisches Bindemittel auf Basis von Wasserglas und/oder Kieselsol, oder ein Hybridbindemittel, insbesondere auf Basis einer wässrigen Organosilikat-Hybrid-Dispersion, umfasst und/oder dass das Bindemittel auf einem Acrylharz, Acrylsiliconharz, Siliconharz, Urethanharz, ungesättigtem Polyesterharz oder Alkydharz basiert und/oder dass

das mindestens eine erste Additiv der Abtönbasiszusammensetzung und/oder das mindestens eine zweite Additiv der Farbtonzusammensetzung ausgewählt ist aus der Gruppe bestehend aus Verdickern, Entschäumern, Flammschutzmitteln, Filmkonservierungsmitteln, Hydrophobierungsmitteln, Mattierungsmitteln, UV-Absorbern, Radikalfängern, Netz- und Dispergiermitteln und Mischungen dieser Verbindungen, und insbesondere mindestens einen Verdicker und/oder mindestens einen Entschäumer umfasst und/oder dass

die Abtönbasiszusammensetzung und/oder die mindestens eine Farbtonzusammensetzung mindestens einen Füllstoff enthalten.

12. Abtönsystem nach einem oder mehreren der vorangehenden Ansprüche, **dadurch gekennzeichnet, dass**

eine Beschichtung aus der Abtönbasiszusammensetzung einen Hellbezugswert gemäß DIN 5033-1:2009-05 im Bereich von 3,8 bis 10, bevorzugt im Bereich von 3,8 bis 8 und besonders bevorzugt im Bereich von 3,8 bis 6 aufweist.

13. Abtönsystem nach einem oder mehreren der vorangehenden Ansprüche, **dadurch gekennzeichnet, dass** eine Beschichtung aus der Abtönbasiszusammensetzung erhalten mit einem Rakel mit einer Spalthöhe von 400 µm auf einer weißen Substratoberfläche, insbesondere dem weißen Teil der Leneta-Prüfkarte vom Typ 2DX, über einen TSR-Wert größer oder gleich 10 %, vorzugsweise größer oder gleich 15 % und besonders bevorzugt größer oder gleich 20 % verfügt, wobei TSR (%) = Rs x 100 % ist und Rs anhand der nachfolgenden Gleichung ermittelt wird:

$$Rs = \int_{280\,nm}^{2500\,nm} \frac{R_\lambda \times E_\lambda \, d\lambda}{E_\lambda \, d\lambda}$$

mit

$R_\lambda$ Reflektionswert der Probe bei gegebener Wellenlänge

$E_\lambda$ Solarstrahlung bei einer gegebenen Wellenlänge $\lambda$ in W x m$^{-2}$ x nm$^{-1}$

$d_\lambda$ für die Berechnung maßgebliches Wellenlängenintervall,

wobei als Berechnungsgrundlage das Referenzspektrum der Globalstrahlung der Sonne nach ASTM G 173-0 3 (2008) (Hemispherical Spectral Solar Irradiance mit Air Mass 1,5) heranzuziehen ist.

14. Abtönsystem nach einem oder mehreren der vorangehenden Ansprüche, **dadurch gekennzeichnet, dass** dieses genau eine Abtönbasiszusammensetzung enthält.

15. Abtönsystem nach einem oder mehreren der vorangehenden Ansprüche, **dadurch gekennzeichnet, dass** das zweite Additiv ein Netz- und Dispergiermittel umfasst.

16. Verwendung des Abtönsystems nach einem oder mehreren der vorangehenden Ansprüche für die Herstellung abgetönter Anstrich- oder Putzsysteme, insbesondere von abgetönten wässrigen Lasuren, Wasserlacken, lösemittelhaltigen Lasuren, Lösemittellacken, Anstrichfarben, insbesondere Dispersionsfarben, besonders bevorzugt Dispersionsaußenfarben, Silikatfarben, Silikonharzfarben, Dispersionssilikatfarben, Sol-Silikat-Farben und/oder Nano-Hybridfarben, insbesondere auf Basis einer wässrigen Organosilikat-Hybrid-Dispersion, Bodenbeschichtungen oder Putzen, insbesondere Silikonharzputze, Silikatputze, Sol-Silikat-Putze, Organosilikat-Hybriddispersionsputze und/oder Kunstharzputze.

17. Verwendung nach Anspruch 16, **dadurch gekennzeichnet, dass** das abgetönte Anstrich- oder Putzsystem für gedämmte Untergründe, insbesondere WDVS-Untergründe, vorgesehen ist.

18. Abtönvorrichtung für die Herstellung einer definierten Anzahl von Farbtönen eines Anstrich- oder Putzsystems, **gekennzeichnet durch** ein Abtönsystem nach einem oder mehreren der Ansprüche 1 bis 15, eine Aufnahme- und Dosiereinrichtung für die mindestens eine Abtönbasiszusammensetzung, enthaltend diese mindestens eine Abtönbasiszusammensetzung, und mindestens eine Aufnahme- und Dosiereinrichtung für die mindestens eine Farbtonzusammensetzung, enthaltend diese mindestens eine Farbtonzusammensetzung, oder insbesondere eine Vielzahl an Aufnahme- und Dosiereinrichtungen für die Vielzahl an Farbtonzusammensetzungen, jeweils enthaltend eine Farbtonzusammensetzung aus der Vielzahl an Farbtonzusammensetzungen, und eine Mischvorrichtung, eingerichtet und ausgelegt, um die Abtönbasiszusammensetzung mit einer Farbtonzusammensetzung zu vermengen.

19. Verfahren zum Abtönen einer Farbtonzusammensetzung, umfassend die Schritte

a) Zurverfügungstellung einer Abtönbasiszusammensetzung gemäß einem oder mehreren der Ansprüche 1 bis 15,
b) Zurverfügungstellung von mindestens einer Farbtonzusammensetzung, vorzugsweise mindestens zwei und besonders bevorzugt mindestens 14 Farbtonzusammensetzung, gemäß einem oder mehreren der Ansprüche 1 bis 15 und
c) Vermischen der Abtönbasiszusammensetzung gemäß a) und einer Farbtonzusammensetzung gemäß b) unter Erhalt eines abgetönten Anstrich- oder Putzsystems.

20. Verwendung einer Zusammensetzung, enthaltend mindestens ein NIR-reflektierendes Schwarzpigment und/oder mindestens ein NIR-transparentes Schwarzpigment oder eine NIR-reflektierende und/oder NIR-transparente schwarze Pigmentmischung gemäß einem oder mehreren der Ansprüche 1 bis 15 und eine Basiszusammensetzung, enthaltend mindestens ein Bindemittel oder mindestens ein Bindemittel und mindestens ein erstes Lösemittel oder mindestens ein Bindemittel und mindestens ein erstes Additiv oder mindestens ein Bindemittel, mindestens ein erstes Lösemittel und mindestens ein erstes Additiv als, insbesondere einzige, Abtönbasiszusammensetzung in einem Kit-of-parts-Abtönsystem nach einem oder mehreren der Ansprüche 1 bis 15 für die Farbeinstellung von Anstrich- und Putzsystemen und

wobei das Kit-of-parts-Abtönsystem ferner umfasst mindestens eine Farbtonzusammensetzung, vorzugsweise mindestens zwei Farbtonzusammensetzungen, besonders bevorzug mindestens 14 Farbtonzusammensetzungen, enthaltend mindestens ein buntes und/oder unbuntes Pigment, mindestens ein zweites Additiv, insbesondere Netz- und Dispergiermittel, und mindestens ein zweites Lösemittel gemäß einem der Ansprüche 1 bis 15.

**Claims**

1. A kit-of-parts tinting system for adjusting the colour of coating and/or plaster systems, comprising

   a) at least one basic tinting composition, containing at least one NIR-reflective black pigment and/or at least one NIR-transparent black pigment or a NIR-reflective and/or NIR-transparent black pigment mixture, and a basic composition, containing at least one binding agent, as well as
   b) at least one hue composition, containing at least one coloured and/or uncoloured pigment, at least one second additive and at least one second solvent.

2. The tinting system according to Claim 1, **characterised in that**
   a coating made of the basic tinting composition, containing at least one NIR-reflective black pigment and/or at least one NIR-transparent black pigment or a NIR-reflective and/or NIR-transparent black pigment mixture, has an h-value in the range of 0 to 360 and a c-value less than 5, determined in accordance with EN ISO 11664-4:2012-06.

3. The tinting system according to Claim 1 or 2, **characterised in that**
   the basic tinting composition exclusively contains NIR-reflective black pigments and/or NIR-transparent black pigments, or the basic tinting composition exclusively contains pigments which supply a NIR-reflective black pigment mixture, and/or the basic tinting composition exclusively contains pigments which supply a NIR-transparent black pigment mixture.

4. The tinting system according to any one or more of the preceding claims, **characterized in that**
   said tinting system comprises at least two hue compositions, preferably at least 14 hue compositions.

5. The tinting system according to any one or more of the preceding claims, **characterized in that**
   the at least one hue composition, preferably the at least two hue compositions and, particularly preferably, the at least 14 hue compositions, has/have no NIR-reflective black pigment, in particular no NIR-reflective pigment, and/or no NIR-transparent black pigment, in particular no NIR-transparent pigment.

6. The tinting system according to any one or more of the preceding claims, **characterised in that**
   the hue composition constitutes or comprises a tinting and/or brightening paste.

7. The tinting system according to any one or more of the preceding claims, **characterised in that**
   the at least one NIR-reflective black pigment and/or the at least one NIR-transparent black pigment is/are present in the basic tinting composition in a quantity in the range of 0.1 to 8.0 per cent by weight, preferably in the range of 0.5 to 7.0 per cent by weight and, particularly preferably, in the range of 1.0 to 6.0 per cent by weight, each based on the total weight of the basic tinting composition.

8. The tinting system according to any one or more of the preceding claims, **characterised in that**
   the basic composition constitutes an aqueous glaze, a water varnish, a solvent-containing glaze, a solvent-based varnish, a paint, in particular a dispersion paint, particularly preferably an exterior dispersion paint, a silicate dispersion paint, a silicate paint, a silicone resin paint, a sol silicate paint and/or nano-hybrid paints, in particular based on an aqueous organosilicate hybrid dispersion, a floor coating, a plaster, in particular a silicone resin plaster, a sol silicate plaster, an organosilicate hybrid dispersion plaster, a synthetic resin plaster and/or a silicate plaster, or is the basic formulation for this purpose.

9. The tinting system according to any one or more of the preceding claims, **characterised in that**
   the at least one NIR-reflective black pigment is selected from the group consisting of NIR-reflective black pigments of the C.I. pigment class P.Br. 29, NIR-reflective black pigments of the C.I. pigment class P.G. 17, NIR-reflective black pigments of the C.I. pigment class P.Bk. 33 and NIR-reflective black pigments of the C.I. pigment class P.Bk. 30, and/or the at least one NIR-transparent black pigment is selected from the group consisting of NIR-transparent black pigments of the C.I. pigment class pigment black 31 (P.Bk. 31) and NIR-transparent black pigments of the C.I. pigment class pigment black 32 (P.Bk. 32).

10. The tinting system according to any one or more of the preceding claims, **characterised in that** the basic composition contains at least one first solvent and/or at least one first additive.

11. The tinting system according to any one or more of the preceding claims, **characterised in that** the binding agent of the basic tinting composition comprises an organic binding agent in the form of an aqueous dispersion based on polymers containing acrylates, vinyl acetate and/or styrene, in particular based on pure acrylates, or an inorganic binding agent based on water glass and/or silica sol, or a hybrid binding agent, in particular based on an aqueous organosilicate hybrid dispersion, and/or the binding agent is based on an acrylic resin, acrylic silicone resin, silicone resin, urethane resin, unsaturated polyester resin or alkyd resin, and/or the at least one first additive of the basic tinting composition and/or the at least one second additive of the hue composition is/are selected from the group consisting of thickeners, anti-foaming agents, flame retardants, film preserving agents, hydrophobing agents, matting agents, UV absorbers, radical quenchers, wetting and dispersing agents and mixtures of these compounds and, in particular, at least one thickener and/or at least one anti-foaming agent, and/or the basic tinting composition and/or the at least one hue composition contain(s) at least one filling agent.

12. The tinting system according to any one or more of the preceding claims, **characterised in that** a coating made of the basic tinting composition has a lightness value in accordance with DIN 5033-1 :2009-05 in the range of 3.8 to 10. preferably in the range of 3.8 to 8 and, particularly preferably, in the range of 3.8 to 6.

13. The tinting system according to any one or more of the preceding claims, **characterised in that** a coating made of the basic tinting composition obtained with a doctor blade having a gap height of 400 $\mu$m on a white substrate surface, in particular the white part of the Leneta test chart of type 2DX, has a TSR value greater than or equal to 10%, preferably greater than or equal to 15% and, particularly preferably, greater than or equal to 20%, wherein TSR (%) = Rs x 100% and Rs is determined on the basis of the following equation:

$$Rs = \int_{280\,nm}^{2500\,nm} \frac{R_\lambda \times E_\lambda \, d\lambda}{E_\lambda \, d\lambda}$$

where

　R $\lambda$ is the reflection value of the specimen at a given wavelength,
　E $\lambda$ is the solar radiation at a given wavelength $\lambda$ in W x m$^{-2}$ x nm$^{-1}$,
　d $\lambda$ is the prevailing wavelength interval for the calculation,

wherein the reference spectrum of the global radiation of the sun in accordance with ASTM G 173-0 3 (2008) (Hemispherical Spectral Solar Irradiance with Air Mass 1.5) is to be used as the basis of the calculation.

14. The tinting system according to any one or more of the preceding claims, **characterized in that** said tinting system contains precisely one basic tinting composition.

15. The tinting system according to any one or more of the preceding claims, **characterized in that** the second additive comprises a wetting and dispersing agent.

16. A use of the tinting system according to any one or more of the preceding claims for the production of tinted coating or plaster systems, in particular tinted aqueous glazes, water varnishes, solvent-containing glazes, solvent-based varnishes, paints, in particular dispersion paints, particularly preferably exterior dispersion paints, silicate paints, silicone resin paints, dispersion silicate paints, sol silicate paints and/or nano-hybrid paints, in particular based on an aqueous organosilicate hybrid dispersion, floor coatings or plasters, in particular silicone resin plasters, silicate plasters, sol silicate plasters, organosilicate hybrid dispersion plasters and/or synthetic resin plasters.

17. The use according to Claim 16, **characterised in that** the tinted coating or plaster system is provided for insulated base coats, in particular ETICS base coats.

18. A tinting device for the production of a defined number of hues of a coating or plaster system, **characterized by** a tinting system according to any one or more of Claims 1 to 15, a receiving and dosing device for the at least one basic tinting composition, containing this at least one basic tinting composition, and at least one receiving and dosing device for the at least one hue composition, containing this at least one hue composition or, in particular, a plurality of receiving and dosing devices for the plurality of hue compositions, each containing one hue composition from the plurality of hue compositions, and a mixing apparatus, set up and designed to blend the basic tinting composition with a hue composition.

19. A method for tinting a hue composition, comprising the steps of

a) providing a basic tinting composition according to any one or more of Claims 1 to 15,
b) providing at least one hue composition, preferably at least two and, particularly preferably, at least 14 hue compositions, according to any one or more of Claims 1 to 15, and
c) mixing the basic tinting composition according to a) and a hue composition according to b), obtaining a tinted coating or plaster system.

20. Use of a composition, containing
at least one NIR-reflective black pigment and/or at least one NIR-transparent black pigment or a NIR-reflective and/or NIR-transparent black pigment mixture according to any one or more of Claims 1 to 15, and
a basic composition containing at least one binding agent or at least one binding agent and at least one first solvent or at least one binding agent and at least one first additive or at least one binding agent, at least one first solvent and at least one first additive as, in particular, the single, basic tinting composition in a kit-of-parts tinting system according to any one or more of Claims 1 to 15 for adjusting the colour of coating and plaster systems, and
wherein the kit-of-parts tinting system further comprises at least one hue composition, preferably at least two hue compositions, particularly preferably at least 14 hue compositions, containing at least one coloured and/or uncoloured pigment, at least one second additive, in particular wetting and dispersing agent, and at least one second solvent according to any one of Claims 1 to 15.

**Revendications**

1. Système à teinter à kit de pièces pour l'ajustement de couleur de systèmes de peinture et/ou de crépi, comprenant

a) au moins une composition de base à teinter, contenant au moins un pigment noir réfléchissant le proche infrarouge et/ou au moins un pigment noir transparent au proche infrarouge et/ou un mélange de pigments noir réfléchissant le proche infrarouge et/ou transparent au proche infrarouge, et une composition de base contenant au moins un liant, ainsi qu'
b) au moins une composition de nuance de couleur, contenant au moins un pigment coloré et/ou non coloré, au moins un deuxième additif et au moins un deuxième solvant.

2. Système à teinter selon la revendication 1, **caractérisé en ce qu'**un revêtement dans la composition de base à teinter, contenant au moins un pigment noir réfléchissant le proche infrarouge et/ou au moins un pigment noir transparent au proche infrarouge ou un mélange de pigments noir réfléchissant le proche infrarouge et/ou transparent au proche infrarouge, présente une valeur h dans la plage de 0 à 360 et une valeur c inférieure à 5, déterminées conformément à la norme ISO 11664-4:2012-06.

3. Système à teinter selon la revendication 1 ou 2, **caractérisé en ce que** la composition de base à teinter contient uniquement des pigments noirs réfléchissant le proche infrarouge et/ou des pigments noirs transparents au proche infrarouge, ou **en ce que** la composition de base à teinter contient uniquement des pigments qui fournissent un mélange de pigments noir réfléchissant le proche infrarouge, et/ou **en ce que** la composition de base à teinter contient uniquement des pigments qui fournissent un mélange de pigments noir transparent au proche infrarouge.

4. Système à teinter selon l'une ou plusieurs des revendications précédentes, **caractérisé en ce que** celui-ci comprend au moins deux compositions de nuances de couleurs, de préférence 14 compositions de nuances de couleurs.

5. Système à teinter selon l'une ou plusieurs des revendications précédentes, **caractérisé en ce que** l'au moins une composition de nuance de couleur, de préférence les au moins deux compositions de nuances de couleurs et en particulier de préférence les au moins 14 compositions de nuances de couleurs, ne présente(nt) aucun pigment noir réfléchissant le proche infrarouge, en particulier aucun pigment réfléchissant le proche infrarouge, et/ou aucun pigment noir transparent au proche infrarouge, en particulier aucun pigment transparent au proche infrarouge.

6. Système à teinter selon l'une ou plusieurs des revendications précédentes, **caractérisé en ce que** la composition de nuance de couleur présente ou comprend une pâte colorante et/ou éclaircissante.

7. Système à teinter selon l'une ou plusieurs des revendications précédentes, **caractérisé en ce que** l'au moins un pigment noir réfléchissant le proche infrarouge et/ou l'au moins un pigment noir transparent au proche infrarouge se trouve(nt) présent(s) dans la composition de base à teinter, à une teneur dans la plage de 0,1 à 8,0 % massique, de préférence dans la plage de 0,5 à 7,0 % massique, et en particulier de préférence dans la plage de 1,0 à 6,0 % massique, respectivement rapporté au poids total de la composition de base à teinter.

8. Système à teinter selon l'une ou plusieurs des revendications précédentes, **caractérisé en ce que** la composition de base représente une lasure aqueuse, une peinture à l'eau, une lasure contenant un solvant, une peinture à solvant, une peinture, en particulier une peinture à dispersion, en particulier de préférence une peinture extérieure à dispersion, une peinture au silicate à dispersion, une peinture au silicate, une peinture à la résine de silicone, une peinture sol-silicate et/ou une peinture nano-hybride, en particulier à base d'une dispersion hybride organosilicate aqueuse, un revêtement de sol, un crépi, en particulier un crépi de résine de silicone, un crépi sol-silicate, un crépi à dispersion hybride organosilicate, un crépi de résine synthétique et/ou un crépi au silicate, ou est la recette de base pour ceux-ci.

9. Système à teinter selon l'une ou plusieurs des revendications précédentes, **caractérisé en ce que** l'au moins un pigment noir réfléchissant le proche infrarouge est sélectionné parmi le groupe se composant de : pigments noirs réfléchissant le proche infrarouge de la classe de pigments C.I. P.Br. 29, pigments noirs réfléchissant le proche infrarouge de la classe de pigments C.I. P.G. 17, pigments noirs réfléchissant le proche infrarouge de la classe de pigments C.I. P.Bk. 33 et pigments noirs réfléchissant le proche infrarouge de la classe de pigments C.I. P.Bk. 30, et/ou **en ce que** l'au moins un pigment noir transparent au proche infrarouge est sélectionné parmi le groupe se composant de : pigments noirs transparents au proche infrarouge de la classe de pigments C.I. Pigment Noir 31 (P.Bk. 31) et pigments noirs transparents au proche infrarouge de la classe de pigments C.I. Pigment Noir 32 (P.Bk. 32).

10. Système à teinter selon l'une ou plusieurs des revendications précédentes, **caractérisé en ce que** la composition de base contient au moins un premier solvant et/ou un premier additif.

11. Système à teinter selon l'une ou plusieurs des revendications précédentes, **caractérisé en ce que** le liant de la composition de base à teinter contient un liant organique sous la forme d'une dispersion aqueuse à base de polymères contenant des acrylates, de l'acétate de vinyle et/ou du styrène, en particulier à base d'acrylates purs, ou un liant anorganique à base de verre soluble et/ou de gel de silice, ou un liant hybride, en particulier à base d'une dispersion hybride organosilicate aqueuse, et/ou **en ce que** le liant est basé sur une résine de silicone acrylique, une résine de silicone, une résine uréthane, une résine polyester insaturée ou une résine alkyde, et/ou **en ce que** l'au moins un premier additif de la composition de base à teinter et/ou l'au moins un deuxième additif de la composition de nuances de couleur est sélectionné parmi le groupe se composant de : épaississants, antimousses, retardateurs de flammes, agents de conservation pour film, agents rendant hydrophobe, agents matants, absorbeurs d'UV, capteurs de radicaux, agents mouillants et de dispersion et mélanges de ces compositions, et comprend en particulier au moins un épaississant et/ou au moins un antimousse, et/ou **en ce que** la composition de base à teinter et/ou l'au moins une composition de nuance de couleur contient/contiennent au moins un agent de remplissage.

12. Système à teinter selon l'une ou plusieurs des revendications précédentes, **caractérisé en ce qu'**un revêtement dans la composition de base à teinter présente un facteur de luminance conformément à DIN 5033-1:2009-05 dans la plage de 3,8 à 10, de préférence dans la plage de 3,8 à 8, et en particulier de préférence dans la plage de 3,8 à 6.

13. Système à teinter selon l'une ou plusieurs des revendications précédentes, **caractérisé en ce qu'**un revêtement dans la composition de base à teinter, obtenu avec une racle avec une hauteur de fente de 400 $\mu$m sur une surface de substrat blanche, en particulier sur la partie blanche de la carte de contrôle Leneta du type 2DX, dispose d'une valeur TSR supérieure ou égale à 10 %, de préférence supérieure ou égale à 15 %, et en particulier de préférence supérieure ou égale à 20 %, TSR (%) = Rs x 100 % étant donné et Rs étant déterminé à partir de l'équation suivante :

$$Rs = \int_{280\,nm}^{2500\,nm} \frac{R_\lambda \times E_\lambda \, d\lambda}{E_\lambda \, d\lambda}$$

avec

R $\lambda$ valeur de réflexion de l'échantillon pour une longueur d'onde donnée
E $\lambda$ rayonnement solaire pour une longueur d'onde donnée $\lambda$ en W x m-2 x nm-1
d $\lambda$ intervalle de longueur d'onde déterminant pour le calcul,

le spectre de référence du rayonnement global du soleil d'après ASTM G 173-0 3 (2008) (irradiance solaire spectrale hémisphérique, Hemispherical Spectral Solar Irradiance, avec masse d'air 1,5) devant être pris en compte comme base du calcul.

14. Système à teinter selon l'une ou plusieurs des revendications précédentes, **caractérisé en ce que** celui-ci contient exactement une composition de base à teinter.

15. Système à teinter selon l'une ou plusieurs des revendications précédentes, **caractérisé en ce que** le deuxième additif comprend un agent mouillant et de dispersion.

16. Utilisation du système à teinter selon l'une ou plusieurs des revendications précédentes pour la fabrication de systèmes de peinture ou de crépi teintés, en particulier de lasures aqueuses, peintures à l'eau, lasures à base de solvants, peintures aux solvants, peintures, en particulier peintures à dispersion, en particulier de préférence peintures extérieures à dispersion, peintures au silicate, go, peintures au silicate de dispersion, peintures sol-silicate, peintures nano-hybrides, en particulier à base d'une dispersion hybride organosilicate aqueuse, revêtements de sol ou crépis, en particulier crépis de résine de silicone, crépis au silicate, crépis sol-silicate, crépis à dispersion hybride organosilicate et/ou crépis de résine synthétique teinté(e)s.

17. Utilisation selon la revendication 16, **caractérisée en ce que** le système de peinture ou de crépi teinté est prévu pour des supports isolés, en particulier des supports à système composite d'isolation thermique.

18. Dispositif à teinter pour la fabrication d'un nombre défini de nuances de couleurs d'un système de peinture ou de crépi, **caractérisé par** un système à teinter selon l'une ou plusieurs des revendications précédentes 1 à 15, une installation de réception et de dosage pour l'au moins une composition de base à teinter, contenant cette au moins une composition de base à teinter, et au moins une installation de réception et de dosage pour l'au moins une composition de nuance de couleur, contenant cette au moins une composition de nuance de couleur, ou en particulier une pluralité d'installations de réception et de dosage pour la pluralité de compositions de nuances de couleurs, respectivement contenant une composition de nuance de couleur de la pluralité de compositions de nuances de couleurs, et un dispositif de mélange, installé et conçu afin de mélanger la composition de base à teinter avec une composition de nuance de couleur.

19. Procédé pour teinter une composition de nuance de couleur, comprenant les étapes :

    a) mise à disposition d'une composition de base à teinter selon l'une ou plusieurs des revendications précédentes 1 à 15,
    b) mise à disposition d'au moins une composition de nuance de couleur, de préférence d'au moins deux et en particulier de préférence d'au moins 14 compositions de nuances de couleurs, selon l'une ou plusieurs des revendications 1 à 15, et
    c) mélange de la composition de base à teinter selon a) et d'une composition de nuance de couleur selon b) avec obtention d'un système de peinture ou de crépi teinté.

20. Utilisation d'une composition, contenant au moins un pigment noir réfléchissant le proche infrarouge et/ou au moins un pigment noir transparent au proche infrarouge ou un mélange de pigments noir réfléchissant le proche infrarouge et/ou transparent au proche infrarouge, selon l'une ou plusieurs des revendications 1 à 15, et une composition de base contenant au moins un liant ou au moins un liant et au moins un premier solvant ou au moins un liant et au moins un premier additif ou au moins un liant, au moins un premier solvant et au moins un premier additif, comme composition de base à teinter, en particulier unique, dans un système à teinter à kit de pièces selon l'une ou plusieurs des revendications 1 à 15 pour l'ajustement de couleur de systèmes de peinture et de crépi, et le système à teinter à kit de pièces comprenant en outre au moins une composition de nuance de couleur, de préférence au moins deux compositions de nuances de couleurs, en particulier de préférence au moins 14 compositions de nuances de couleurs, contenant au moins un pigment coloré et/ou non coloré, au moins un deuxième additif, en particulier un agent mouillant et de dispersion, et au moins un deuxième solvant selon l'une des revendications 1 à 15.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009023606 A1
- WO 2011056564 A2
- WO 2010030971 A2
- WO 2013037928 A1
- DE 112011100613 T5
- JP 2008194563 A

**In der Beschreibung aufgeführte Nicht-Patentliteratur**

- **JIE QIN et al.** The Optical Properties of Black Coatings and Their Estimated Cooling Effect and Cooling Energy Savings Potential. *Journal of Power and Energy Engeneering,* 2014, vol. 2, 68-75